# FASCICULE DE BREVET EUROPEEN

(11) **EP 0 838 385 B1**
(45) Date de publication et mention de la délivrance du brevet: **26.07.2000**
(21) Numéro de dépôt: 97402488.7
(22) Date de dépôt: 21.10.1997
(51) Int. Cl.: B61D 39/00, B60J 7/08

(54) **Véhicule de transport à bâchage latéral**
Transportfahrzeug mit seitlich montierter Planenabdeckung
Transport vehicle with side mounted tarpaulin cover

(30) Priorité: 22.10.1996 FR 9612827
(43) Date de publication de la demande: 29.04.1998
(73) Titulaire: SOCIETE NATIONALE DES CHEMINS DE FER FRANCAIS, F-75436 Paris Cedéx 09 (FR)
(72) Inventeur: Moronval, Frédéric, 45400 Fleury-les-Aubrais (FR)
(74) Mandataire: Casalonga, Axel

(56) Documents cités:
- GB-A- 2 084 241
- US-A- 5 271 336
- US-A- 5 549 347

## Description

La présente invention concerne le domaine des véhicules de transport, notamment des wagons de marchandises, du type tombereau pourvus d'une bâche capable de recouvrir le dessus du véhicule.

Les wagons de transport de marchandises en vrac comprennent un contenant défini par deux grandes parois latérales et deux petites parois d'extrémité rendues solidaires d'un fond, le contenant étant recouvert, à sa partie supérieure, par une bâche amovible. En effet, le transport de certains produits à ciel ouvert risque de polluer l'environnement par le dégagement de poussières et de perdre de cette façon une partie plus ou moins importante du chargement. Certains produits transportés peuvent nécessiter une protection contre les intempéries et pollutions extérieures.

Pour recouvrir la partie supérieure du contenant, on connaît l'utilisation de bâches planes qui sont étendues manuellement au-dessus du contenant, des organes de fixation permettant de rendre la bâche solidaire en périphérie des extrémités supérieures des parois du contenant du véhicule de transport. La mise en place ou le retrait manuel d'une bâche nécessite un temps considérable et crée un danger d'accident pour l'opérateur situé en partie haute du véhicule pour l'accrochage de la bâche. On cherche donc à rendre la bâche amovible par un système mécanique.

On connaît par les demandes de brevet français n° 2 523 527 (BOCAHUT) et n° 2 667 286 (BECHER) des dispositifs d'enroulement d'une bâche le long d'un des côtés d'un wagon. Toutefois, l'enroulement d'une telle bâche est peu aisé dans la pratique.

La demande de brevet français n° 2 610 574 (SOFACO) concerne un débâchage par repliage en accordéon de la bâche, au voisinage de l'un des côtés extrêmes du wagon. Toutefois, un tel dispositif ne permet pas d'ouvrir totalement la partie supérieure du wagon ce qui en ralentit le déchargement. De plus, les glissières latérales permettant le coulissement de la bâche risquent de s'encrasser.

Le brevet français n° 2 689 466 (MAHAUT) propose une bâche pourvue d'une pluralité de traverses en forme d'arceaux qui se déplacent en coulissant le long de la partie supérieure du véhicule et qui sont logées dans un magasin latéral dudit véhicule, la bâche en position débâchée, étant disposée le long de la face frontale du véhicule. Toutefois, compte tenu de la longueur importante d'un wagon de marchandises, il est préférable de ne pas manoeuvrer la bâche dans le sens de la longueur mais plutôt dans le sens de la largeur.

Le brevet français n° 2 715 360 (GENET) propose d'obturer l'ouverture d'une remorque par deux demi-bâches occupant chacune la moitié de l'espace à recouvrir. Chaque demi-bâche est montée sur un cadre pouvant tourner autour d'un axe horizontal placé en partie haute de la remorque le long d'un bord longitudinal. En position débâchée, chaque demi-bâche se trouve le long de la paroi latérale de la remorque.

La présente invention a pour objet de remédier aux inconvénients des dispositifs décrits ci-dessus et de proposer un véhicule recouvert d'une bâche à manoeuvre mécanique dont la fabrication et l'utilisation soient simples, tout en permettant de découvrir complètement la partie supérieure du véhicule par une manoeuvre de débâchage qui puisse être commandée par un seul côté dudit véhicule.

Le véhicule de transport, notamment un wagon de marchandises, selon la présente invention, est du type comprenant un contenant défini par un fond, deux parois latérales et deux parois de bout solidaires du fond, le dessus du contenant pouvant être recouvert par une bâche et des moyens pour manoeuvrer la bâche entre une position où elle recouvre le contenant et une position où la bâche est, au moins en partie, glissée le long d'une des parois du contenant. La bâche est fixée le long d'un premier côté sur le bord supérieur d'une paroi latérale du contenant, le second côté de la bâche étant relié à des premiers moyens de traction adaptés pour faire glisser la bâche, lors d'une phase de bâchage, jusque dans la position où elle recouvre complètement le contenant, et des deuxièmes moyens de traction étant reliés à la bâche, dans une zone intermédiaire de celle-ci, et adaptés pour faire glisser la bâche, lors d'une phase de débâchage, jusque dans une position pliée le long de ladite paroi latérale du contenant, où elle dégage complètement le dessus dudit contenant. Ainsi, la bâche, réalisée en une seule pièce, est repliée le long d'une paroi latérale du véhicule ce qui évite d'avoir à l'enrouler.

Dans un mode de réalisation de l'invention, les premiers moyens de traction comprennent au moins deux liens souples reliés chacun, d'une part à une extrémité du second côté de la bâche et d'autre part à un moyen d'enroulement du lien souple pouvant être entraîné en rotation.

Dans un mode de réalisation de l'invention, le bord supérieur des parois de bout du contenant présente une surface de glissement coopérant avec le lien souple correspondant lors des phases de bâchage et de débâchage.

Dans un autre mode de réalisation de l'invention, des poulies de renvoi sont montées au voisinage du bord supérieur des parois de bout du contenant, à l'opposé de ladite paroi latérale du contenant, des moyens d'enroulement des liens souples étant montés au voisinage du fond du contenant.

Avantageusement, les moyens d'enroulement des liens souples comprennent un arbre d'enroulement unique monté en vue de sa rotation, le long d'une des parois latérales du contenant. L'arbre d'enroulement unique peut être monté le long de ladite paroi latérale du contenant.

Dans un mode de réalisation de l'invention, les deuxièmes moyens de traction comprennent au moins deux liens souples reliés chacun, d'une part à une extrémité de la zone intermédiaire de la bâche et d'autre part, à un moyen d'enroulement du lien souple pouvant être entraîné en rotation. Les moyens d'enroulement des liens souples peuvent comprendre un arbre d'enroulement unique monté en vue de sa rotation, le long de ladite paroi latérale du contenant, au voisinage du fond du contenant.

Avantageusement, l'arbre d'enroulement unique est commun à l'ensemble des liens souples, l'entraînement en rotation dudit arbre étant assuré, si nécessaire, par l'intermédiaire d'un dispositif démultiplicateur d'effort.

De préférence, la bâche comporte des organes longitudinaux de raidissement.

Grâce à l'invention, on peut dégager en une seule fois et en un minimum de temps la partie supérieure du véhicule, lors du débâchage et on facilite considérablement la tâche de l'opérateur.

L'invention sera mieux comprise à l'étude de la description détaillée d'un mode de réalisation pris à titre d'exemple nullement limitatif et illustré par les dessins annexés, sur lesquels :
la figure 1 est une vue schématique en perspective de l'extrémité d'un wagon, selon l'invention, en position débâchée; et
la figure 2 est une vue semblable à la figure 1 de l'extrémité d'un wagon en position bâchée.

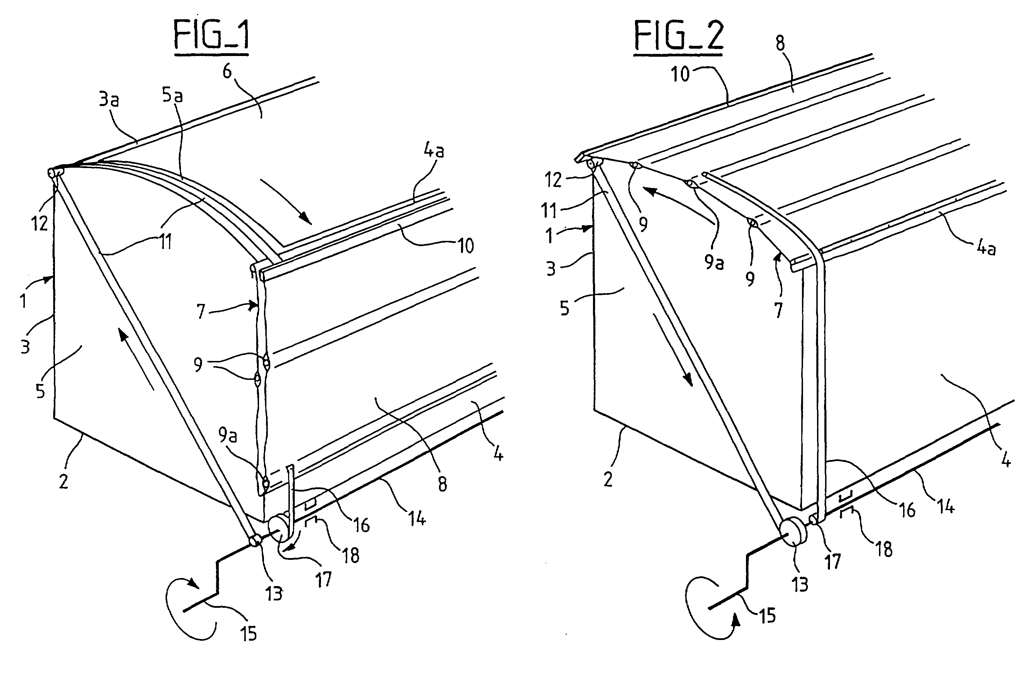

Comme on peut le voir sur les figures, le wagon comprend un contenant 1 comprenant un fond 2, des parois latérales 3 et 4 et des parois d'extrémité dont une seule référencée 5 est visible sur les figures. Le contenant 1 définit ainsi une partie supérieure 6 qui peut être ouverte (figure 1) ou fermée (figure 2). De façon connue, le contenant 1 repose sur des moyens de roulement non représentés. L'extrémité non représentée du wagon pourra être identique à celle-ci.

Une bâche 7 est prévue pour être capable de venir recouvrir la partie supérieure 6. La bâche 7 est fixée sur un côté le long du bord supérieur 4a de la paroi latérale 4 et comprend une toile 8 maintenue par trois raidisseurs 9 réalisés avec des profilés tubulaires, et un raidisseur 10 disposé sur le côté de la bâche opposée au côté fixé sur le bord supérieur 4a de la paroi latérale 4. Comme on le voit sur la figure 2, le raidisseur 10 vient en contact avec le bord supérieur 3a de la paroi latérale 3 de façon à obturer complètement la partie supérieure 6.

En position débâchée, sur la figure 1, le raidisseur 10 est disposé le long du bord supérieur 4a de la paroi latérale 4 la bâche étant repliée en long en deux épaisseurs contre ladite paroi latérale 4.

Le contenant 1 comprend également à chacune de ses extrémités, une sangle 11 fixée à une extrémité longitudinale du raidisseur 10, passant dans une poulie de renvoi 12 située à proximité du bord supérieur 3a de la paroi latérale 3 et venant s'enrouler sur un tambour 13 entraîné en rotation par un axe 14 solidaire d'une manivelle 15. Une deuxième sangle 16 est fixée au raidisseur central 9a de la bâche 7 et vient s'enrouler sur un tambour 17 également solidaire en rotation de l'axe 14. L'axe 14 est disposé le long du wagon à proximité du bas de la paroi latérale 4 et repose sur des paliers 18 dont un seul est représenté. A titre de variante, on pourrait prévoir et disposer l'axe 14 du côté de la paroi latérale 3.

Pour ouvrir la partie supérieure 6 du contenant 1, on tourne la manivelle 15 dans le sens horaire ce qui provoque l'enroulement de la sangle 16 autour du tambour 17 et tend à tirer le raidisseur central 9a d'abord à proximité du bord supérieur 4a de la paroi latérale 4 puis vers le bas le long de la paroi latérale 4, et en même temps le déroulement de la sangle 11 enroulée sur le tambour 13 et permet au raidisseur 10 de passer progressivement du bord supérieur 3a au bord supérieur 4a, la sangle 11 passant toujours par la poulie de renvoi 12 et glissant sur le bord supérieur 5a de la paroi d'extrémité 5 (voir les flèches sur la figure 1). Dans la position débâchée telle qu'illustrée sur la figure 1, la partie supérieure 6 du contenant 1 est totalement découverte ce qui facilite le chargement ou le déchargement du wagon, notamment avec des matériaux en vrac.

Pour fermer le partie supérieure 6, on actionne la manivelle 15 dans le sens anti-horaire ce qui provoque l'enroulement de la sangle 11 autour du tambour 13 et fait glisser le raidisseur 10 du bord supérieur 4a vers le bord supérieur 3a en entraînant la bâche 7 avec lui. En même temps, le tambour 17 se dévide de la sangle 16 ce qui permet au raidisseur central 9a de suivre le mouvement imposé par le raidisseur 10 (voir les flèches sur la figure 2).

On remarque que sur les figures 1 et 2 les tambours 13 et 17 sont de diamètres différents. Cela est dû à leurs variations de rayons d'enroulement dues à l'épaisseur de sangle déjà enroulée. Lorsqu'à partir de la position ouverte, on commence à rebâcher, la sangle 11 s'enroule autour du tambour 13 qui est presque à vide et offre donc un faible rayon d'enroulement. La bâche 7 a donc tendance à remonter lentement. Pendant ce temps le tambour 17 sur lequel une grande partie de la longueur de la sangle 16 est enroulée se dévide rapidement. Ainsi le mouvement de remontée et de fermeture de la bâche 7 entraînée par le tambour 13 n'est pas gêné par le tambour 17 et la tension de la sangle 16. Il en est de même lorsque l'on commence une opération d'ouverture de la bâche 17, où le tambour 17 presque à vide commence à tirer la sangle 16 et provoque le déplacement lent du raidisseur central 9a, tandis que le tambour 13 sur lequel est enroulée une partie importante de la sangle 11 se dévide rapidement et ne gêne pas le mouvement de la bâche 7.

A titre de variante on peut également prévoir d'entraîner l'axe 14 par un système démultiplicateur d'effort ou par un moteur.

Grâce à l'invention, on obtient un véhicule, notamment un wagon de chemin de fer, dans lequel les matériaux transportés sont bien protégés conte les intempéries et dont la bâche est facile à manipuler du sol sans qu'un opérateur n'ait besoin de monter jusqu'au niveau de la partie supérieure du wagon ce qui permet de limiter considérablement les risques d'accident. Ce wagon peut être débâché avec une partie supérieure entièrement dégagée ce qui facilite la manutention du chargement du wagon notamment de matériaux en vrac.

## Revendications

1. Véhicule de transport, notamment wagon de marchandises, du type comprenant un contenant (1) défini par un fond (2), deux parois latérales (3, 4) et deux parois de bout (5) solidaires du fond, le dessus du contenant pouvant être recouvert par une bâche (7) et des moyens pour manoeuvrer la bâche entre une position où elle recouvre le contenant et une position où la bâche est, au moins en partie, glissée le long d'une des parois du contenant, caractérisé par le fait que la bâche est fixée le long d'un premier côté sur le bord supérieur (4a) d'une paroi latérale (4) du contenant, le second côté de la bâche étant relié à des premiers moyens de traction (10, 11, 12, 13) adaptés pour faire glisser la bâche, lors d'une phase de bâchage, jusque dans la position où elle recouvre complètement le contenant et des deuxièmes moyens de traction (16, 17) étant reliés à la bâche, dans une zone intermédiaire de celle-ci, et adaptés pour faire glisser la bâche, lors d'une phase de débâchage, jusque dans une position pliée, le long de ladite paroi latérale du contenant, où elle dégage complètement le dessus du contenant.

2. Véhicule selon la revendication 1 caractérisé par le fait que les premiers moyens de traction comprennent au moins deux liens souples (11) reliés chacun, d'une part à une extrémité du second côté de la bâche et d'autre part à un moyen d'enroulement (13) du lien souple pouvant être entraîné en rotation.

3. Véhicule selon la revendication 2 caractérisé par le fait que le bord supérieur des parois de bout du contenant présente une surface de glissement coopérant avec le lien souple correspondant lors des phases de bâchage et débâchage.

4. Véhicule selon l'une des revendications 1 et 2 caractérisé par le fait que des poulies de renvoi (12) sont montées au voisinage du bord supérieur des parois de bout du contenant, à l'opposé de ladite paroi latérale du contenant, les moyens d'enroulement des liens souples étant montés au voisinage du fond du contenant.

5. Véhicule selon l'une quelconque des revendications 2 à 4 caractérisé par le fait que les moyens d'enroulement des liens souples comprennent un arbre d'enroulement (14) unique monté en vue de sa rotation , le long d'une des parois latérales du contenant.

6. Véhicule selon la revendication 5 caractérisé par le fait que l'arbre d'enroulement unique est monté le long de ladite paroi latérale du contenant.

7. Véhicule selon l'une quelconque des revendications précédentes caractérisé par le fait que les deuxièmes moyens de traction comprennent au moins deux liens souples (16) reliés chacun, d'une part à une extrémité de la zone intermédiaire de la bâche et d'autre part à un moyen d'enroulement (17) du lien souple pouvant être entraîné en rotation.

8. Véhicule selon la revendication 7 caractérisé par le fait que les moyens d'enroulement des liens souples comprennent un arbre d'enroulement unique monté en vue de sa rotation , le long de ladite paroi latérale du contenant, au voisinage du fond du contenant.

9. Véhicule selon la revendication 8 caractérisé par le fait que l'arbre d'enroulement unique est commun à l'ensemble des liens souples, l'entraînement en rotation dudit arbre étant assuré, si nécessaire, par l'intermédiaire d'un dispositif démultiplicateur d'effort.

10. Véhicule selon l'une quelconque des revendications précédentes caractérisé par le fait que la bâche comporte des organes longitudinaux de raidissement (9, 10).

## Claims

1. Transport vehicle, particularly goods wagon, of the type comprising a container (1) defined by a bottom (2), two side walls (3, 4) and two end walls (5) secured to the bottom, the top of the container being coverable by a tarpaulin (7) and means for manoeuvring the tarpaulin between a position in which it covers the container and a position in which the tarpaulin is at least partially slid along one of the walls of the container, characterized in that the tarpaulin is fixed along a first side on the upper edge (4a) of a side wall (4) of the container, the second side of the tarpaulin being connected to first hauling means (10, 11, 12, 13) designed to make the tarpaulin slide, during a tarpaulin-covering phase, into a position in which it completely covers the container and second hauling means (16, 17) being connected to the tarpaulin, in an intermediate region thereof, and designed to make the tarpaulin slide, during a tarpaulin uncovering phase, into a folded position along the said side wall of the container, in which position it completely uncovers the top of the container.

2. Vehicle according to claim 1, characterized in that the first hauling means comprise at least two flexible ties (11) each connected, firstly, to one end of the second side of the tarpaulin and, secondly, to a means (13) for winding the flexible tie, which means can be rotated.

3. Vehicle according to claim 2, characterized in that the upper edge of the end walls of the container exhibits a sliding surface collaborating with the corresponding flexible tie during the tarpaulin-covering and tarpaulin-uncovering phases.

4. Vehicle according to either of claims 1 and 2, characterized in that return pulleys (12) are mounted near the upper edge of the end walls of the container, opposite the said side wall of the container, the means for winding the flexible ties being mounted near the bottom of the container.

5. Vehicle according to any one of claims 2 to 4, characterized in that the means for winding the flexible ties comprise a single winding shaft (14) mounted so that it can be rotated, along one of the side walls of the container.

6. Vehicle according to claim 5, characterized in that the single winding shaft is mounted along the said side wall of the container.

7. Vehicle according to any one of the preceding claims, characterized in that the second hauling means comprise at least two flexible ties (16) each connected, firstly, to one end of the intermediate region of the tarpaulin and, secondly, to a means (17) for winding the flexible tie, which means can be rotated.

8. Vehicle according to claim 7, characterized in that the means for winding the flexible ties comprise a single winding shaft mounted so that it can be rotated, along the said side wall of the container, near the bottom of the container.

9. Vehicle according to claim 8, characterized in that the single winding shaft is common to all of the flexible ties, the said shaft being driven in rotation, if necessary, by a force demultiplication device.

10. Vehicle according to any one of the preceding claims, characterized in that the tarpaulin comprises longitudinal stiffeners (9, 10).

## Patentansprüche

1. Transportfahrzeug, insbesondere Güterwagen, einer Bauart, die einen durch einen Boden (2), zwei Seitenwände (3,4) und zwei mit dm Boden fest verbundene Stirnwände begrenzten Behälter mit durch eine Plane (7) abdeckbarer Behälteroberseite und Mittel aufweist, um die Plane zwischen einer Stellung, in der sie den Behälter abdeckt und einer Stellung, in der die Plane, wenigstens zum Teil, längs einer der Behälterwände verschoben ist, zu verstellen, dadurch gekennzeichnet, dass die Plane längs einer ersten Seite an dem oberen Rand (4,1) einer Seitenwand (4) des Behälters befestigt ist, wobei die zweite Seite der Plane mit ersten Zugmittel (10,11,12,13) verbunden ist, die dazu dienen die Plane bei einem Abdeckvorgang in eine Stellung gleiten zu lassen, in der sie den Behälter vollständig abdeckt und wobei zweite Zugmittel (16,17) an der Plane in einem Zwischenbereich derselben befestigt sind und dazu dienen die Plane bei einem Aufdeckvorgang in eine gefaltete Stellung längs der vorgenannten Behälterseitenwand gleiten zu lassen, in der sie die Behälteroberseite vollständig freigibt.

2. Fahrzeug nach Anspruch 1, dadurch gekennzeichnet, dass die ersten Zugmittel wenigstens zwei biegsame Bänder (11) aufweisen, von denen jedes einerseits an einem Ende der zweiten Seite der Plane und andererseits an einem Aufwickelmittel (13) des biegsamen Bandes befestigt ist, das in Umdrehung versetzt werden kann.

3. Fahrzeug nach Anspruch 2, dadurch gekennzeichnet, dass der obere Rand der Stirnwände des Behälters jeweils eine mit dem entsprechenden biegsamen Band bei dem Abdeck- und dem Aufdeckvorgang zusammenwirkende Gleitfläche aufweist.

4. Fahrzeug nach einem der Ansprüche 1 oder 2, dadurch gekennzeichnet, dass Umlenkrollen (12) in der Nähe des oberen Randes der Behälterstirnwände, der vorgenannten Behälterseitenwand gegenüberliegend, angeordnet sind, wobei die Aufwickelmittel für die biegsamen Bänder in der Nähe des Behälterbodens angebracht sind.

5. Fahrzeug nach einem der Ansprüche 2 bis 4, dadurch gekennzeichnet, dass die Aufwickelmittel für die biegsamen Bänder längs einer der Behälterseitenwände eine drehbar gelagerte einzelne Aufwickelwelle (14) aufweisen.

6. Fahrzeug nach Anspruch 5, dadurch gekennzeichnet, dass die einzelne Aufwickelwelle entlang der Behälterseitenwand gelagert ist.

7. Fahrzeug nach einer der vorhergehenden Ansprüche, dadurch gekennzeichnet, dass die zweiten Zugmittel wenigstens zwei biegsame Bänder (16) aufweisen, von denen jedes einerseits an einem Ende des Zwischenbereiches der Plane und andererseits an einem Aufwickelmittel (17) des biegsamen Bandes befestigt ist, das in Umdrehung versetzt werden kann.

8. Fahrzeug nach Anspruch 7, dadurch gekennzeichnet, dass die Aufwickelmittel der biegsamen Bänder längs der vorgenannten Behälterseitenwand in der Nähe des Behälterbodens eine einzige drehbar gelagerte Aufwickelwelle aufweisen.

9. Fahrzeug nach Anspruch 8, dadurch gekennzeichnet, dass die einzige Aufwickelwelle für alle biegsamen Bänder gemeinsam ist, wobei der Drehantrieb der Welle gegebenenfalls über eine Untersetzungsvorrichtung erfolgt.

10. Fahrzeug nach einem der vorhergehenden Ansprüche, dadurch gekennzeichnet, dass die Plane längsgerichtete Versteifungselemente (9,10) aufweist.
